# EUROPEAN PATENT SPECIFICATION

(11) **EP 0 328 310 B1**
(45) Date of publication and mention of the grant of the patent: **29.09.1993**
(21) Application number: 89301041.3
(22) Date of filing: 03.02.1989
(51) Int. Cl.: A01C 3/06, A01C 15/00

(54) **Manure spreader**
Düngerstreuer
Distributeur d'engrais

(30) Priority: 10.02.1988 GB 8802987
(43) Date of publication of application: 16.08.1989
(73) Proprietor: Broomhall, Keith, Aslacton Norwich Norfolk NR15 2DS (GB)
(72) Inventor: Broomhall, Keith, Aslacton Norwich Norfolk NR15 2DS (GB)
(74) Representative: Cowan, David Robert

(56) References cited:
- AT-B- 1 990
- DE-B- 2 224 465

## Description

This invention relates to agricultural manure spreaders for spreading manure, usually livestock manure, over the ground.

Manure spreaders have been proposed which include a generally cylindrical body and located at the axis of a part cylindrical part of the body is a rotating shaft. The shaft carries a plurality of chains which act as flails when the shaft is rotated to discharge manure from the body. A manure spreader of this kind is described in DE-B-2224465. Such manure spreaders are limited in the volume of manure which can be carried by the diameter and length of the body and the larger the body the more manure which can be carried. However when the body size is increased the torque requirements to rotate the shaft, particularly at the start of a spreading operation, also increase. This imposes considerable strain on the drive to the shaft and on the shaft itself so there comes a point at which the body size cannot be increased any further without cost and power constraints arising.

An object of the invention is to provide a manure spreader of increased capacity which is able to obviate problems with existing spreaders.

According to the invention a manure spreader is characterised in that the body comprises a fixed body part and a movable body part and the movable body part is movable towards and away from the shaft between full and empty positions whereby in the empty position the movable body part has the axis of its cylindrical portion substantially at the axis of the shaft, and in its full position the axis of its cylindrical portion is spaced laterally of the axis of the shaft, and that between the empty and full positions the body parts accommodate a larger quantity of manure for spreading than in the empty position, full discharge of the spreader being achieved by progressive movement of the movable body part towards the empty position by drive means connected between the movable body part and a fixed part of the spreader.

It will be appreciated that in use the shaft and its associated flails can act on only a portion of the manure contained in the body, when the movable body part is in the full position. As the movable body part is moved towards the empty position during emptying the manure is transferred into the path of the flails and is thereby discharged. Thus the carrying capacity of the body is increased without an increase in the torque requirements of the spreader shaft.

Movement of the movable body part may be about an axis parallel to and below the axis of the shaft and such movement may be achieved by a ram or rams.

Preferably when the body parts are in the empty position their part cylindrical portions are formed as a combined cylindrical surface with a common axis thereby enabling the flails to fully empty the body in such position.

The flail construction may be of conventional form consisting of axially spaced chains attached to the shaft, each chain carrying a flail end which, with the chain fully extended from the shaft, lies adjacent the cylindrical wall of the body. At the ends of the shaft the shaft may carry rigid flails which are utilised at the commencement of a spreading operation when the body is full of manure.

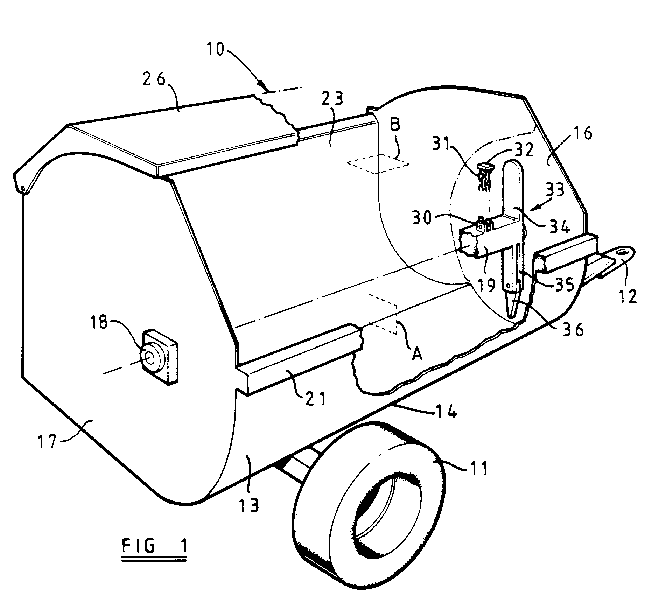

Further features of the invention will appear from the following description of an embodiment of the invention given by way of example only and with reference to the drawings, in which:-
Fig. 1 is a perspective view of a manure spreader partially cut away for clarity;
Fig. 2 is a sectional end elevation of the spreader of Fig. 1;
Fig. 3 is a vertical cross-section showing a seal between the two body portions at position A in Fig. 1, and
Fig. 4 is a horizontal section of the seal at position B in Fig. 1.

Referring to the drawings a manure spreader is shown which is intended to be drawn behind and powered by an agricultural tractor. The spreader includes a body 10 which is mounted on wheels 11 and a drawbar 12 at one end of the body is provided for attachement to the tractor.

The body 10 is formed in two parts including a fixed body part 13 which is secured to a chassis 14 to which the wheels 11 and the drawbar 12 are attached. The fixed body part 13 is of part-cylindrical shape in end elevation and has a forward end plate 16 and a rear end plate 17. The end plates 16 and 17 carry support bearings 18 for a rotary shaft 19. The forward end plate 16 also carries drive transmission (not shown) for transmitting drive from a tractor power take-off to the shaft 19, in known manner.

The fixed body part 13 defines at one side a lip 21 over which manure is loaded and discharged during operation. At the other side of the body part 13 is located a body pivot 22 laying parallel to the shaft 19 which in turn lies at the axis of the cylinder of the body part 13.

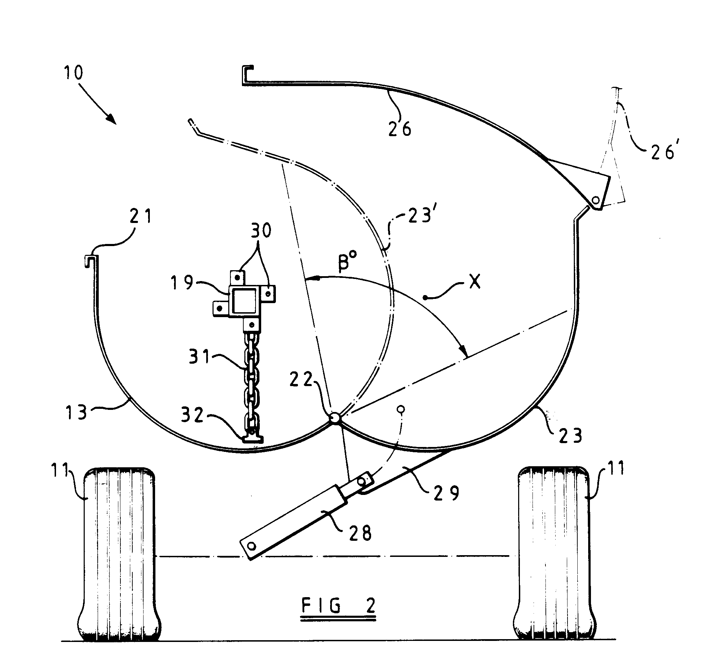

The body 10 also includes a movable body part 23 which is attached to the body part 13 for pivotal movement about the pivot 22 between a full position, shown in full lines in Fig. 2, and an empty position, shown in chain lines 23′ in Fig. 2.

The movable body part 23 is also of part-cylindrical shape over its length, the diameter of the cylinder being the same as that of the body part 13.

A top cover or lid 26 is pivotally attached at its ends to the end plates 16 and 17. The lid is constructed such that its inner surface describes an arc which coincides with the art of movement of the upper horizontal edge of the movable body part 23. The lid is normally positioned as shown during spreading. However to facilitate the loading of manure the lid may be pivoted upwards to the position 26′, for example by a hydraulic ram (not shown).

The body part 23 is moved between its full and empty positions by a hydraulic ram or rams 28 pivotally attached to the chassis 14 at one end and to a plate 29 secured to the part 23 at the other end. Extension and contraction of the ram 28 causes the part 23 to pivot about the pivot 22. In the full position the axis X of the cylinder of the part 23 is spaced to one side of the shaft axis and in the empty position the axis X is concident with the axis of rotation of the shaft 19.

The shaft 19 is rotatable about its longitudinal axis and in this case it is of square tubular cross-section. The shaft 19 carries brackets 30 spaced apart in the axial direction of the shaft and successive brackets 30 are displaced about the axis on different sides of the square. Each of the brackets 30 carries a length of chain 31 and at the outer ends of the chains are secured flail ends 32, the length of the chains being such that the flail ends 32 are each closely spaced relative to the inner wall of the fixed body part 13.

At the ends of the shaft 19 are located, so-called, starter flails 33 which include an arm 34 fixed to the shaft at one side of the shaft and spaced apart arms 35 at the other side of the shaft, between which arms 35 is pivotally attached a flail arm 36, all in known manner.

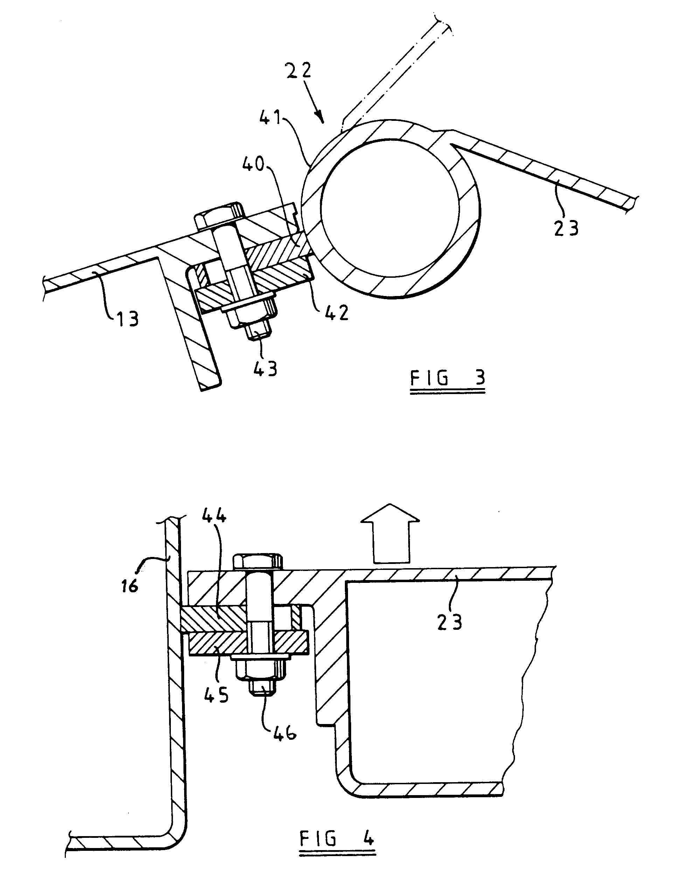

To ensure a seal between the fixed and the movable body parts 13 and 23 and prevent manure contained in the body from escaping, there is provided a sealing arrangement shown in Figs. 3 and 4.

Fig. 3 shows a sealing member 40 in the region of the body pivot 22. The member 40, which is conveniently of resilient material, is urged into contact with the outer cylindrical surface 41 of the body pivot part 22 secured to the movable part 23. The member 40 is clamped in position by a clamping strip 42 secured by bolts 43.

Fig. 4 shows a similar arrangement for securing a sealing member 44 against the end plates 16 and 17 of the fixed body part 13. Again a clamping strip 45 clamps the member 44 and is secured by bolts 46.

In operation the movable body part 23 is moved to the full position for the loading up of the body with manure to be spread. The manure fills the available space in both body parts up to the appropriate level depending on the nature of the manure, for example liquid or semi-liquid manure or solid manure. The spreader can then be transported to the area to be applied with the manure and the rotary shaft 19 is rotated to commence spreading. The movable body part 23 is retained in the full position until the manure in the fixed body part 13 has been discharged, or nearly discharged. The ram 28 is then operated to move the movable body part 23 towards the fixed body part 13 whereupon the manure in the part 23 is transferred into the path of the flails and spreads. When the body part 23 has been moved to the empty position the full contents of the spreader can be spread and the body emptied. Upon return of the body part 23 to the full position a new load of manure is loaded for a further spreading operation.

By this simple arrangement the capacity of the spreader is increased beyond the volume swept by the flails without any increase in the loads imposed on the shaft during the commencement of a spreading operation.

## Claims

1. A manure spreader having a body formed in two parts, each body part (13 and 23) having a substantially part-cylindrical portion, the spreader further comprising a rotary shaft (19) located at the axis of the part-cylindrical portion of a body part (13) and the shaft (19) carrying a plurality of flails (31, 32) along its length, discharge of the spreader being effected by rotation of the shaft (19) and its associated flails (31, 32), characterised in that the body comprises a fixed body part (13) and a movable body part (23) and the movable body part (23) is movable towards and away from the shaft between full and empty positions (23') whereby in the empty position the movable body part (23) has the axis of its cylindrical portion substantially at the axis of the shaft (19), and in its full position the axis of its cylindrical portion is spaced laterally of the axis of the shaft (19), and that between the empty and full positions the body parts accommodate a larger quantity of manure for spreading than in the empty position, full discharge of the spreader being achieved by progressive movement of the movable body part (23) towards the empty position (23') by drive means (28) connected between the movable body part (23) and a fixed part of the spreader.

2. A manure spreader according to Claim 1 characterised in that the movable body part (23) is movable about an axis located substantially parallel to, below and spaced laterally from the axis of the shaft (19).

3. A manure spreader according to any one of the preceding claims characterised in that the part cylindrical portions of the body parts (13 and 23) form a combined substantially part-cylindrical surface with a common axis when the movable body part (23) is in the empty position.

4. A manure spreader according to any one of the preceding claims characterised in that the axis of the shaft (19) lies generally horizontally in use and is connected to drive means for rotating the shaft (19), the flails (31, 32) including a plurality of chains (31) attached at locations spaced along the axis of the shaft (19), the flails (31, 32) each having a length substantially equal to the radius of the part-cylindrical portions of the body parts (13, 23).

5. A manure spreader according to any one of the preceding claims characterised in that the movable body part (23) carries a lid (26) hingedly attached thereto about an axis parallel to the axis of the shaft (19).

6. A manure spreader according to any one of the preceding claims characterised in that the movable and fixed body parts (13, 23) are interconnected about longitudinal edges of the parts along which lies the axis of movement between the parts, said axis of movement being defined by a pivot (22) sealed against egress of the contents of the spreader.

7. A manure spreader according to any one of the preceding claims characterised in that the fixed body part (13) carries end plates (16, 17) at opposite ends of the part (13), the end plates (16, 17) defining the ends of spreader body in the empty and full positions of the movable body part (23), and the movable body part (23) lying in sealing engagement with the end plates (16, 17) throughout its movement.

## Patentansprüche

1. Düngerstreuer mit einem aus zwei Teilen gebildeten Körper, wobei jeder Teil (13 und 23) des Körpers ein im wesentlichen teilzylindrisches Teilstück aufweist, wobei der Streuer ferner eine Drehwelle (19) umfaßt, die auf der Achse des teilzylindrischen Teilstücks eines Teils (13) des Körpers liegt, und wobei die Welle (19) entlang ihrer Länge eine Mehrzahl an Flegeln (31, 32) trägt, wobei ein Entleeren des Streuers durch Drehung der Welle (19) und ihrer zugeordneten Flegel (31, 32) bewirkt wird, dadurch gekennzeichnet, daß der Körper einen festen Teil (13) des Körpers und einen bewegbaren Teil (23) des Körpers umfaßt und der bewegbare Teil (23) des Körpers zwischen einer vollen und einer leeren Stellung (23') auf die Welle zu- bzw. davon wegbewegbar ist, wodurch die Achse des zylindrischen Teilstücks des bewegbaren Teils (23) des Körpers in der leeren Stellung im wesentlichen auf der Achse der Welle (19) liegt und die Achse seines zylindrischen Teilstücks in seiner vollen Stellung seitlich von der Achse der Welle (19) beabstandet ist, und daß die Teile des Körpers zwischen der leeren und der vollen Stellung eine größere Düngermenge zum Streuen aufnehmen können als in der leeren Stellung, wobei ein vollständiges Entleeren des Streuers durch eine fortschreitende Bewegung des bewegbaren Teils (23) des Körpers auf die leere Stellung (23') zu erreicht wird, und zwar mittels einer Antriebseinrichtung (28), die zwischen dem bewegbaren Teil (23) des Körpers und einem festen Teil des Streuers angeschlossen ist.

2. Düngerstreuer gemäß Anspruch 1, dadurch gekennzeichnet, daß der bewegbare Teil (23) des Körpers um eine Achse bewegbar ist, die im wesentlichen parallel zu, unterhalb und seitlich beabstandet von der Achse der Welle (19) liegt.

3. Düngerstreuer gemäß einem der vorhergehenden Ansprüche, dadurch gekennzeichnet, daß die teilzylindrischen Teilstücke der Teile (13 und 23) des Körpers eine kombinierte im wesentlichen teilzylindrische Oberfläche mit einer gemeinsamen Achse bilden, wenn sich der bewegbare Teil (23) des Körpers in der leeren Stellung befindet.

4. Düngerstreuer gemäß einem der vorhergehenden Ansprüche, dadurch gekennzeichnet, daß die Achse der Welle (19) beim Gebrauch im allgemeinen horizontal liegt und mit einer Antriebseinrichtung zum Drehen der Welle (19) verbunden ist, wobei die Flegel (31, 32) eine Mehrzahl an Ketten (31) einschließen, die an voneinander beabstandeten Stellen entlang der Achse der Welle (19) angebracht sind, wobei die Flegel (31, 32) jeweils eine Länge aufweisen, die im wesentlichen gleich dem Radius der teilzylindrischen Teilstücke der Teile (13, 23) des Körpers ist.

5. Düngerstreuer gemäß einem der vorhergehenden Ansprüche, dadurch gekennzeichnet, daß der bewegbare Teil (23) des Körpers einen daran um eine zur Achse der Welle (19) parallele Achse klappbar angebrachten Deckel (26) trägt.

6. Düngerstreuer gemäß einem der vorhergehenden Ansprüche, dadurch gekennzeichnet, daß der bewegbare und der feste Teil (13, 23) des Körpers an Längskanten der Teile miteinander verbunden sind, entlang derer die Bewegungsachse zwischen den Teilen liegt, wobei die Bewegungsachse durch einen Drehpunkt (22) definiert wird, der gegen einen Abgang des Inhalts des Streuers abgedichtet ist.

7. Düngerstreuer gemäß einem der vorhergehenden Ansprüche, dadurch gekennzeichnet, daß der feste Teil (13) des Körpers an gegenüberliegenden Enden des Teils (13) Stirnplatten (16, 17) trägt, wobei die Stirnplatten (16, 17) die Enden des Streuerkörpers in der leeren und in der vollen Stellung des bewegbaren Teils (23) des Körpers definieren und wobei der bewegbare Teil (23) des Körpers während seiner gesamten Bewegung in dichtendem Eingriff mit den Stirnplatten (16, 17) steht.

## Revendications

1. Distributeur d'engrais présentant un corps formé en deux parties, chaque partie de corps (13 et 23) présentant une portion sensiblement en cylindre partiel, le distributeur comprenant en outre un arbre rotatif (19) situé au niveau de l'axe de la portion en cylindre partiel d'une partie de corps (13) et l'arbre (19) portant une pluralité de fléaux (31, 32) le long de sa longueur, le déversement du distributeur étant effectué par rotation de l'arbre (19) et de ses fléaux associés (31, 32), caractérisé en ce que le corps comprend une partie fixe (13) de corps et une partie mobile (23) de corps et la partie mobile (23) de corps est mobile en direction et en éloignement de l'arbre entre une position pleine et une position vide (23') grâce à quoi dans la position vide la partie mobile (23) de corps présente l'axe de sa portion cylindrique sensiblement au niveau de l'axe de l'arbre (19), et dans sa position pleine l'axe de sa portion cylindrique est espacé latéralement de l'axe de l'arbre (19), et en ce que entre la position vide et la position pleine les parties du corps logent une quantité d'engrais plus importante destinée à être distribuée que dans la position vide, le déversement complet du distributeur étant obtenu par mouvement progressif de la partie mobile (23) du corps en direction de la position vide (23') par un moyen d'entraînement (28) relié entre la partie mobile (23) du corps et une partie fixe du distributeur.

2. Distributeur d'engrais selon la revendication 1, caractérisé en ce que la partie mobile (23) du corps est mobile autour d'un axe situé sensiblement parallèle à l'axe de l'arbre (19), sous celui-ci et espacé latéralement de celui-ci.

3. Distributeur d'engrais selon l'une quelconque des revendications précédentes, caractérisé en ce que les portions en cylindre partiel des parties (13 et 23) du corps forment une surface combinée sensiblement en cylindre partiel à axe commun lorsque la partie (23) mobile du corps est dans la position vide.

4. Distributeur d'engrais selon l'une quelconque des revendications précédentes, caractérisé en ce que l'axe de l'arbre (19) se trouve généralement à l'horizontale pendant usage et est relié au moyen d'entraînement afin de faire tourner l'arbre (19), les fléaux (31, 32) comportant une pluralité de chaînes (31) attachées au niveau d'emplacements espacés le long de l'axe de l'arbre (19), les fléaux (31, 32) possédant chacun une longueur sensiblement égale au rayon des portions en cylindre partiel des parties (13, 23) du corps.

5. Distributeur d'engrais selon l'une quelconque des revendications précédentes, caractérisé en ce que la partie mobile (23) du corps porte un couvercle (26) attaché par des charnières à celle-ci autour d'un axe parallèle à l'axe de l'arbre (19).

6. Distributeur d'engrais selon l'une quelconque des revendications précédentes, caractérisé en ce que les parties mobile et fixe (13, 23) du corps sont reliées mutuellement autour d'arêtes longitudinales des parties le long desquelles se trouve l'axe de mouvement entre les parties, ledit axe de mouvement étant défini par un pivot (22) étanche pour empêcher la sortie du contenu du distributeur.

7. Distributeur d'engrais selon l'une quelconque des revendications précédentes, caractérisé en ce que la partie fixe (13) du corps porte des plaques d'extrémité (16, 17) au niveau des extrémités opposées de la partie (13), les plaques d'extrémité (16, 17) définissant les extrémités du corps du distributeur dans la position vide et dans la position pleine de la partie mobile (23) du corps, et la partie mobile (23) du corps se trouvant en engagement étanche avec les plaques d'extrémité (16, 17) pendant tout son mouvement.
